# EUROPÄISCHE PATENTSCHRIFT

(11) **EP 1 891 291 B1**
(45) Veröffentlichungstag und Bekanntmachung des Hinweises auf die Patenterteilung: **31.12.2008**
(21) Anmeldenummer: 05771840.5
(22) Anmeldetag: 12.08.2005
(51) Int. Cl.: E05B 71/00, E05B 73/00

(54) **FAHRRADBÜGELSCHLOSS**
SHACKLE-TYPE LOCK FOR A BICYCLE
CADENAS EN U POUR BICYCLETTE

(30) Priorität: 02.06.2005 DE 202005008772 U
(43) Veröffentlichungstag der Anmeldung: 27.02.2008
(73) Patentinhaber: Solutions Branding & Design Companies AG, 20357 Hamburg (DE)
(72) Erfinder: GOLTA, Karel J., 22359 Hamburg (DE); HOLGER, Prüssner, 21224 Rosengarten-Klecken (DE); UHLIG, Günter, 21279 Appel/Eversen-Heide (DE)
(74) Vertreter: Meier, Frank
(86) Internationale Anmeldenummer: PCT/EP2005/008817
(87) Internationale Veröffentlichungsnummer: WO 2006/128489

(56) Entgegenhaltungen:
- WO-A-20/06021781
- DE-U1- 29 509 803
- US-A- 6 109 770
- PATENT ABSTRACTS OF JAPAN Bd. 1995, Nr. 11, 26. Dezember 1995 (1995-12-26) & JP 07 208011 A (SEKISUI CHEM CO LTD), 8. August 1995 (1995-08-08)

## Beschreibung

Die Erfindung betrifft ein Fahrradbügelschloss mit einem in einem Riegelteil verriegelbaren Bügelteil.

Derartige Fahrradbügelschlösser sind aus dem Stand der Technik bekannt. So zeigt beispielsweise die Internet-Seite www.kryptonitelock.com derartige Bügelschlösser für Fahrräder. Bei solchen Bügelschlössern ist in dem im wesentlichen zylinderförmigen Riegelteil ein mit Hilfe eines Schlüssels abschließbares Schloss vorgesehen. Mit diesem Schloss lässt sich der in entsprechende Öffnungen im Riegelteil einschiebbare Bügelteil mit dem Riegelteil verriegeln. Zum Abschließen eines Fahrrads wird das Schloss geöffnet, der Bügelteil aus dem Riegelteil herausgezogen, der Bügelteil beispielsweise über den Hinterreifen und die Sattelstütze geschoben, in das Riegelteil eingesteckt und mit dem Schloss im Riegelteil verriegelt.

Aufgabe der vorliegenden Erfindung ist es, Fahrradbügelschlösser der eingangs genannten Art zu verbessern.

Diese Aufgabe wird durch ein Fahrradbügelschloss gemäß Anspruch 1 gelöst.

Die Erfindung schließt die Erkenntnis ein, dass moderne Fahrräder keine von einem Dynamo versorgte Leuchtkörper für Vorder- und Rücklicht mehr aufweisen, sondern dass derartige Leuchtkörper heutzutage batteriebetrieben sind. Auf diese Weise können die Leuchtkörper für Vorder- und/oder Rücklicht an beliebigen Stellen am Fahrrad angebracht werden. Die Erfindung schließt weiterhin die Erkenntnis ein, dass auch die bekannten Fahrradbügelschlösser zu ihrem Transport während des Fahrens an irgendeiner Stelle am Fahrrad befestigt werden müssen. Im Stand der Technik ist daher zusätzlich zu den beiden Befestigungsvorrichtungen für die Leuchtkörper vom Vorder- und Rücklicht auch eine Befestigungsvorrichtung zum Transport des Fahrradbügelschlosses notwendig.

Weiterhin schließt die Erfindung darüber hinaus noch die Erkenntnis ein, dass moderne Beleuchtungseinheiten für Fahrräder ein beliebtes Ziel für Diebe sind. Es ist daher für den Benutzer eines Fahrrads nicht nur notwendig, das Fahrrad mit dem Fahrradbügelschloss abzuschließen, sondern weiterhin auch notwendig, Vorder- und Rücklicht beim Abstellen des Fahrrads mitzunehmen, um einen Diebstahl von Vorder- und Rücklicht zu verhindern.

Die vorgenannten Probleme des Standes der Technik werden gemäß der Ausführungsform nach Anspruch 1 durch die vorliegende Erfindung dadurch gelöst, dass ein erster Leuchtkörper, der beispielsweise als Rücklicht dient, an dem Riegelteil des Fahrradbügelschlosses angeordnet ist, während ein zweiter Leuchtkörper, der beispielsweise als Vorderlicht dient, an dem Bügelteil des Fahrradbügelschlosses angeordnet ist. Auf diese Weise wird erreicht, dass beim Abschließen des Fahrrads mit dem erfindungsgemäßen Fahrradbügelschloss gleichzeitig auch Vorder- und Rücklicht mit am Fahrrad gesichert werden, ohne dass auch nur der geringste zusätzliche Aufwand für den Nutzer des erfindungsgemäßen Fahrradbügelschlosses notwendig ist.

Das erfindungsgemäße Fahrradbügelschloss ist somit tatsächlich eine Kombination von Diebstahlsicherung für das Fahrrad und Diebstahlsicherung für die Fahrradbeleuchtung in einem einzigen Schloss. Dabei bildet der Schlosskörper des Fahrradbügelschlosses selbst durch den Riegelteil beispielsweise das Frontlicht und durch den Bügelteil beispielsweise das Hecklicht.

Zwar ist es aus dem DE 295 09 803 U1 bereits bekannt, an das Ende eines Schließkabels eine Lampe anzubringen. Bei diesem Stand der Technik ist jedoch nur das Hecklicht an dem Spiralkabelschloss angebracht. Das Vorderlicht ist ein - wie auch sonst im oben beschriebenen Stand der Technik - separates Teil, welches im Falle des Fahrradabstellens separat behandelt und gesichert werden muss. Dieses separate Vorderlicht bzw. Frontlicht ist somit nicht integraler Bestandteil des Spiralkabelschlosses dieses Standes der Technik.

Auch das DE 296 17 046 U1 zeigt eine Vorrichtung zur diebstahl- und/oder beleuchtungstechnischen Sicherung eines Fahrzeugs. Jedoch wird auch bei dieser Vorrichtung zum einen kein Bügelschloss verwendet und zum anderen ist neben einer komplizierten Hüllung des Leuchtkörpers zum Schutz desselben ein separates Kabel notwendig, um die Schlossfunktion auszuführen. Vor allem jedoch wird nur eine einzige Leuchte offenbart, so dass die gleichzeitige und vorgeschriebene Beleuchtung des Fahrrads nach vorne und hinten mit weißem bzw. rotem Licht nicht gewährleistet werden kann. Schließlich können Vorder-und Rückleuchte daher auch nicht gleichzeitig mit der Sicherung des Fahrrades gesichert werden, wenn das Fahrrad abgestellt wird.

Im Gegensatz zu diesem Stand der Technik benötigt das erfindungsgemäße Fahrradbügelschloss weder einen separaten Schutzkörper, noch den in diesem Stand der Technik vorgesehenen Riegel. Denn bei dem erfindungsgemäßen Fahrradbügelschloss bilden das bevorzugt aus Stahl gefertigte Schloss selbst sowie der nicht flexible und ebenfalls bevorzugt aus Stahl gefertigte Bügel ein Gehäuse für die Leuchtkörper und deren zugeordnete Elektronik bzw. elektrische Verdrahtung. Darüber hinaus wird bei dem vorgenannten Stand der Technik zum Schutz der elektrischen und illuminierenden Teile ein separater Körper verschlossen, um diese Teile zu schützen. Dazu ist der separate Körper mit einem Riegel versehen, um ihn gegebenenfalls öffnen zu können, um Wartungs-und Reparaturarbeiten vornehmen zu können. Im Gegensatz hierzu wird bei der vorliegenden Erfindung ein derart separat mit einem Riegel zu verschließender Körper überflüssig.

Bevorzugte Ausführungsformen der Erfindung zeichnen sich dadurch aus, dass der erste Leuchtkörper zur Abstrahlung von im wesentlichen weißem Licht, beispielsweise zur Bildung eines Vorderlichts, oder im wesentlichen roten Licht, beispielsweise zur Bildung eines Rücklichts, ausgebildet ist. Auch ist es möglich, dass der erste Leuchtkörper zur Abstrahlung von weißem und rotem Licht ausgebildet ist, so dass er als Vorder- und als Rücklicht verwendet werden kann. Ebenso ist es möglich, dass der zweite Leuchtkörper zur Abstrahlung von im wesentlichen weißem Licht zur Verwendung als Frontlicht oder zur Abstrahlung von im wesentlichen rotem Licht zur Verwendung als Rücklicht ausgebildet ist oder durch die Möglichkeit der Abstrahlung von weißem und rotem Licht sowohl als Vorder- als auch als Rücklicht für das Fahrrad verwendet werden kann. Selbstverständlich ist es aus Energiespargründen auch möglich, das Vorderlicht nicht in weiß, sondern in anderen Farben, beispielsweise in grün oder blau auszuführen. Genauso ist es möglich, den ersten oder den zweiten Leuchtkörper unabhängig von der jeweils verwendeten Farbe auch mit einer Blinkfunktion auszustatten, so dass die Abstrahlung des gewünschten Lichts in Intervallen erfolgt. Bevorzugt wird jedoch der erste Leuchtkörper rotes Rücklicht zur Bildung einer Rückleuchte und der zweite Leuchtkörper weißes Licht zur Bildung einer Vorderleuchte abstrahlen.

Eine weitere Ausführungsform der vorliegenden Erfindung zeichnet sich dadurch aus, dass der Riegelteil in einer zugeordneten, an einem Fahrrad befestigbaren ersten Aufnahme lösbar, bevorzugt mittels einer Klemm-, Klick- und/oder Steckverbindung, befestigbar ist. Auf diese Weise wird durch einfache Art und Weise sichergestellt, dass der mit dem bevorzugt als Rückleuchte ausgebildeten zweiten Leuchtkörper versehene Riegelteil in einfacher Art und Weise am Fahrrad angebracht werden kann, wenn das Fahrrad bewegt wird, und genauso in einfacher Art und Weise vom Fahrrad abgenommen werden kann, wenn das Fahrrad mit Hilfe des Riegelteils abgeschlossen werden soll.

Gleiches gilt bevorzugt für den Bügelteil, der bevorzugt in einer zugeordneten, an einem Fahrrad befestigbaren zweiten Aufnahme lösbar, bevorzugt mittels einer Klemm-, Klick- und/oder Steckverbindung befestigbar ist.

Die vorgenannten ersten und zweiten Aufnahmen sind bevorzugt an einer Sattelstütze und/oder an einem Lenker des Fahrrads lösbar, bevorzugt jeweils auch justierbar, befestigt, um den jeweiligen Leuchtkörpern die richtige Position zur Bildung einer Vorder- und einer Rückleuchte zu sichern.

Bei einer weiteren Ausführungsform der Erfindung sind der erste und/oder der zweite Leuchtkörper, bevorzugt mittels einer Klemm-, Klick- und/oder Steckverbindung lösbar, an dem Riegelteil und/oder an dem Bügelteil befestigt. Auf diese Weise lässt sich der jeweilige Leuchtkörper einfach austauschen, wenn er beschädigt wurde, verbraucht ist oder beispielsweise eine andere Farbe gewünscht ist.

Bei dem ersten und/oder dem zweiten Leuchtkörper kann es sich um aktive Leuchtkörper, d.h. mit Glühbirnen oder Leuchtdioden versehene Leuchtkörper handeln und/oder um passive Leuchtkörper, d.h. um mit Reflektoren versehene Leuchtkörper handeln. Auf diese Weise wird insbesondere bei der Verwendung des Leuchtkörpers als Rücklicht auch ein Reflektor mit in das erfindungsgemäße Fahrradbügelschloss integriert, um von hinten an das Fahrrad heranfahrende Fahrzeuge auf das Fahrrad durch die beispielsweise Katzenaugen verwendenden Reflektoren aufmerksam zu machen.

Bei einer weiteren bevorzugten Ausführungsform der Erfindung wird mindestens eine an dem Riegelteil und/oder an dem Bügelteil angeordnete und mit dem jeweiligen Leuchtkörper verbundene Energieversorgung für den ersten und/oder den zweiten Leuchtkörper an dem Fahrradbügelschloss vorgesehen. Diese Energieversorgung, die bevorzugt aus in einem entsprechenden Batteriefach angeordneten Batterien besteht, die über eine elektronische Steuerung mit den jeweiligen Glühlampen oder Leuchtdioden verbunden sind, sichert die Unabhängigkeit des Fahrradbügelschlosses bei der Verwendung als Vorder- bzw. Rücklicht.

Sowohl die vorgenannte Energieversorgung als auch die Leuchtkörper selber sind bevorzugt in Gehäusen untergebracht, die durch den Riegelteil und/oder den Bügelteil gebildet werden. Dabei ist es besonders bevorzugt, wenn der Riegelteil ein erstes Gehäuse für ein als Rücklicht verwendeten ersten Leuchtkörper mit entsprechendem Batteriefach und der zugeordneten Elektronik bildet, während der Bügelteil ein zweites Gehäuse für den als Vorderlicht verwendeten zweiten Leuchtkörper, das entsprechende zweite Batteriefach und die entsprechende zweite Steuerelektronik bildet.

Weitere bevorzugte Ausführungsformen der Erfindung sind in den Unteransprüchen angegeben.

Bevorzugte Ausführungsformen der Erfindung sind im folgenden mit Bezug auf die begleitenden Zeichnungen beschrieben. Die Zeichnungen zeigen:
Fig. 1 zeigt schematisch einige Grundelemente eines erfindungsgemäßen Fahrradbügelschlosses in einer ersten Ausführungsform;
Fig. 2 zeigt schematisch die Grundelemente der Figur 1 an einem Fahrrad in geschlossenem Zustand des Fahrradbügelschlosses der Ausführungsform der Figur 1;
Fig. 3 zeigt schematisch die Grundelemente der Figur 1 an einem Fahrrad in geöffnetem Zustand der Ausführungsform des Fahrradbügelschlosses der Fig. 1, wobei die rückwärtige Anordnung des Riegelteils in zwei Varianten dargestellt ist; und
Fig. 4 bis 15 zeigen verschiedene detaillierte Ansichten einer zweiten Ausführungsform des erfindungsgemäßen Bügelschlosses.

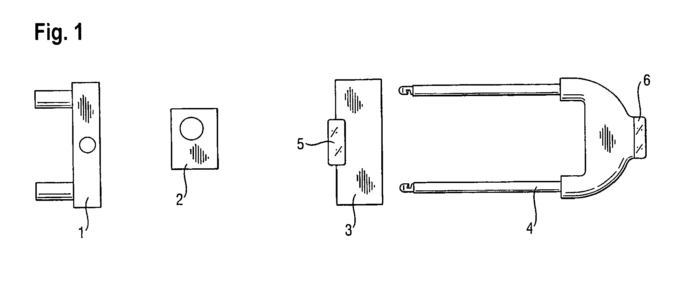

Fig. 1 zeigt in schematischer Darstellung wesentliche Elemente einer ersten Ausführungsform eines erfindungsgemäßen Fahrradbügelschlosses.

Figur 1 zeigt einen Adapter 1, der als Aufnahme für einen in einem Riegelteil 3 verriegelbaren Bügelteil 4 des Fahrradbügelschlosses dient. Weiterhin ist dargestellt ein weiterer Adapter 2, der als Aufnahme für den Riegelteil 3 dient. An dem Riegelteil 3 ist ein erster Leuchtkörper 5 befestigt. An dem Bügelteil 4 ist ein zweiter Leuchtkörper 6 befestigt. Der erste Leuchtkörper 5 dient zur Abstrahlung von im wesentlichen weißen Licht, während der Leuchtkörper 6 zur Abstrahlung von im wesentlichen roten Licht dient.

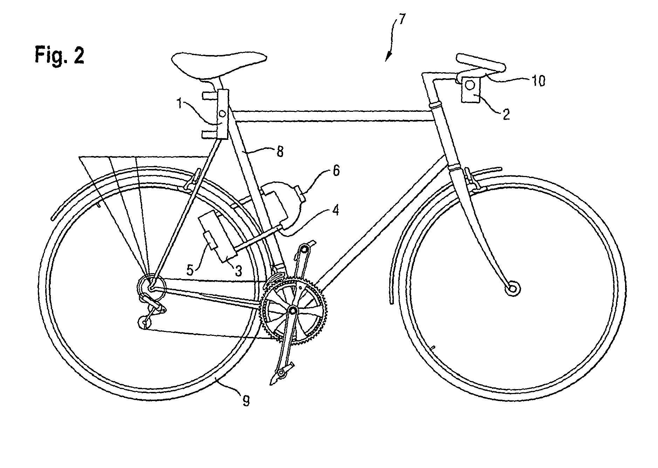

Figur 2 zeigt die in Figur 1 schematisch dargestellten Elemente des Fahrradbügelschlosses in geschlossener Form des Fahrradbügelschlosses an einem mit dem Fahrradbügelschloss gegen Diebstahl gesicherten Fahrrad 7. Zu diesem Zweck wurde der Bügelteil 4 über eine Sattelstütze 8 des Fahrrads 7 und einen Hinterreifen 9 des Fahrrads 7 geschoben und mit dem Riegelteil 3 verriegelt und das Fahrradbügelschloss abgeschlossen. Figur 2 zeigt weiterhin die Elemente 1 und 2 an ihren am Fahrrad 7 befestigten Positionen. Das Adapterelement 1 zur Aufnahme des Bügelteils 4 während der Fahrt ist an der Sattelstütze 8 befestigt. Das Adapterelement 2 zur Aufnahme des Riegelteils 3 während der Fahrt ist an einem Lenker 10 des Fahrrads 7 befestigt.

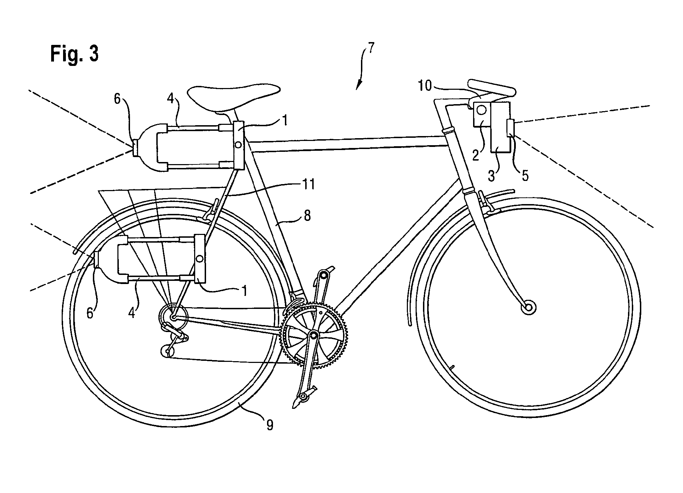

Figur 3 zeigt die Elemente der Figur 1 in einem Zustand, in dem das Fahrrad 7 zur Fahrt bereit ist und die Leuchtkörper 5 und 6 ihre Funktion als Vorder (Leuchtkörper 5) - bzw. Rücklicht (Leuchtkörper 6) ausüben können. Dazu ist der Riegelteil 3 im Aufnahmeadapter 2 verriegelt und der Leuchtkörper 5 eingeschaltet (siehe gestrichelte Linien rechts in Figur 3, die das vom Leuchtkörper 5 abgestrahlte Licht schematisch darstellen). Gleichzeitig wurde der Bügelteil 4 in der Adapteraufnahme 1 verriegelt und der Leuchtkörper 6 eingeschaltet (siehe gestrichelte Linien links in Figur 3, die das vom Leuchtkörper 6 abgestrahlte Licht schematisch darstellen). Dabei ist in der Figur 3 die in der Figur 2 dargestellte Position der Adapteraufnahme 1 an der Sattelstütze 8 dargestellt und gleichzeitig noch eine weitere Variante zur Positionierung der Adapteraufnahme 1 dargestellt, bei der die Adapteraufnahme 1 an einer Stütze 11 eines Gepäckträgers des Fahrrads 7 befestigt ist.

In den Figuren 2 und 3 entsprechen alle übrigen Teile des Fahrrads 7 dem Stand der Technik, der jedem Fachmann auf diesem Gebiet geläufig ist, so dass auf übliche Beschreibungen und Fahrräder verwiesen werden kann.

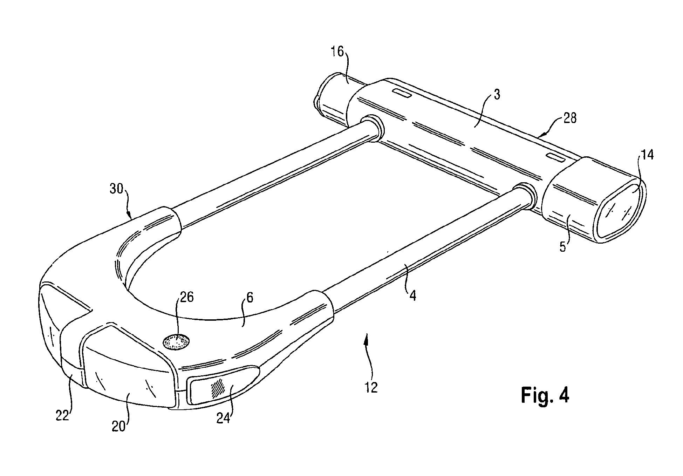

Figur 4 zeigt eine zweite Ausführungsform eines Fahrradbügelschlosses 12. Gleiche oder funktionsgleiche Teile, wie in den Figuren 1 bis 3 sind mit den gleichen Bezugszeichen bezeichnet.

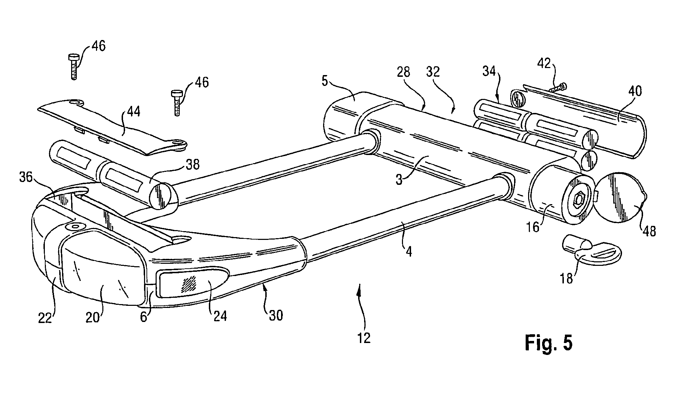

Entgegen der ersten Ausführungsform der Figuren 1 bis 3 weist der Riegelteil 3 des Fahrradbügelschlosses 12 der Figur 4 einen Leuchtkörper 5 auf, dessen Leuchteinheit 14 entlang der Längsachse des Riegelteils 3 Licht abstrahlt. Weiterhin ist in der Figur 4 ein Schloss 16 zur Aufnahme eines in Figur 5 dargestellten Schlüssels 18 zum Abschließen des Schlosses 16 und somit zum Verriegeln des Bügelteils 4 in dem Riegelteil 3 dargestellt.

Bei dem Fahrradbügelschloss 12 der Figur 4 ist die Leuchteinheit 20 des Leuchtkörpers 6 des Bügelteils 4 durch eine Strebe 22 eingefasst. Darüber hinaus weist der Leuchtkörper 6 außenliegende Protektoren 24 zum Schutz gegen seitliche Einwirkung auf. Weiterhin ist ein Schalter 26 zum Ein- und Ausschalten der Leuchteinheit 20 des Leuchtkörpers 6 vorgesehen.

Der Riegelteil 3 bildet ein erstes Gehäuse 28, den ersten Leuchtkörper 5 und die erste Leuchteinheit 14, während der Bügelteil 4 ein zweites Gehäuse 30 für den zweiten Leuchtkörper 6 und die zweite Leuchteinheit 20 bildet.

Figur 5 zeigt das Fahrradbügelschloss 12 der Figur 4 in einer perspektivischen Ansicht von unten in der Figur 4. Dabei sind durch Explosionszeichnungen ein erstes Batteriefach 32 zur Aufnahme von ersten Batterien 34 in dem ersten Gehäuse 28 dargestellt. Weiterhin ist ein zweites Batteriefach 36 zur Aufnahme von zweiten Batterien 38 in dem Gehäuse 30 in einem durch eine Explosionszeichnung dargestellten geöffneten Zustand dargestellt.

Das erste Batteriefach 32 weist einen ersten Deckel 40 auf, der mit Hilfe von einer Schraube 42 verschlossen werden kann. Das zweite Batteriefach 36 weist einen zweiten Deckel 44 auf, der mit Hilfe von Schrauben 46 verschlossen werden kann.

Das Schloss 16 weist einen Deckel 48 zum Schützen des Schlosses 16 gegen Staub und andere Umwelteinflüsse auf. Der Schlüssel 18 dient zum Öffnen und Schließen des Schlosses 16, um den Bügelteil 4 in dem Riegelteil 3 im geschlossenen Zustand des Fahrradbügelschlosses 12 zu sichern.

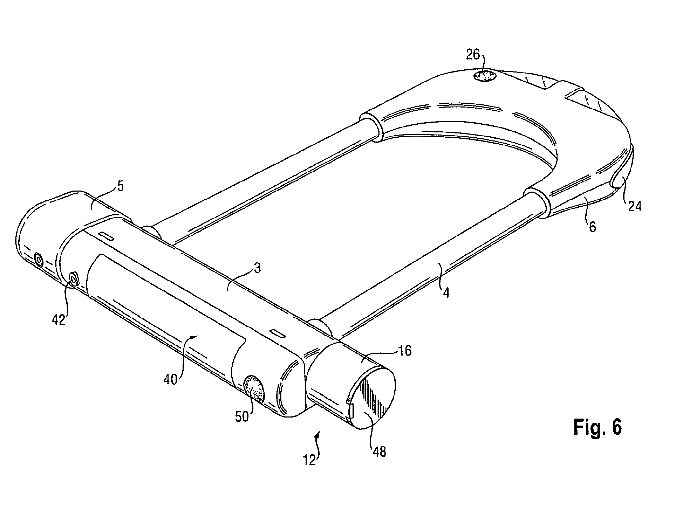

Figur 6 zeigt das Fahrradbügelschloss 12 in der Ausführungsform der Figur 4 in einer weiteren perspektivischen Ansicht. Die Figur 6 zeigt einen Schalter 50 zum Ein- und Ausschalten des ersten Leuchtkörpers 5 am Riegelteil 3.

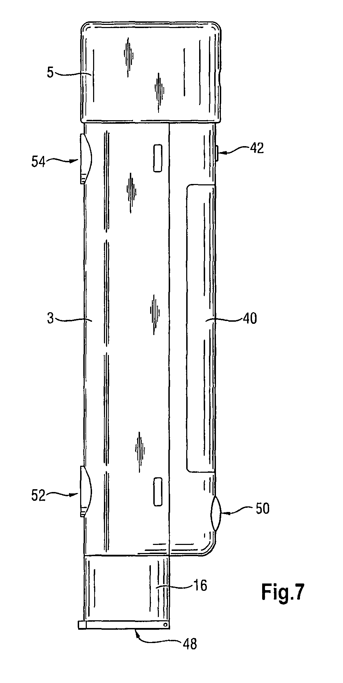

Figur 7 zeigt eine Seitenansicht des Riegelteils 3. Es ist die Position von Öffnungen 52 und 54 in dem Riegelteil 3 auf der linken Seite der Figur 7 zu erkennen, welche Öffnungen 52 und 54 zur Aufnahme und Verriegelung des Bügelteils 4 dienen, wenn das Fahrradbügelschloss 12 geschlossen wird.

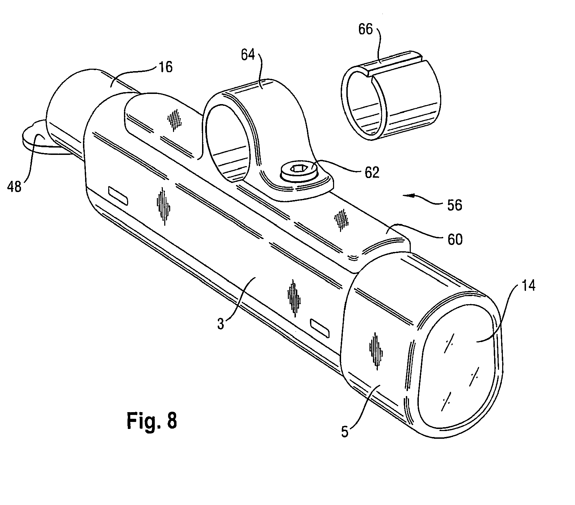

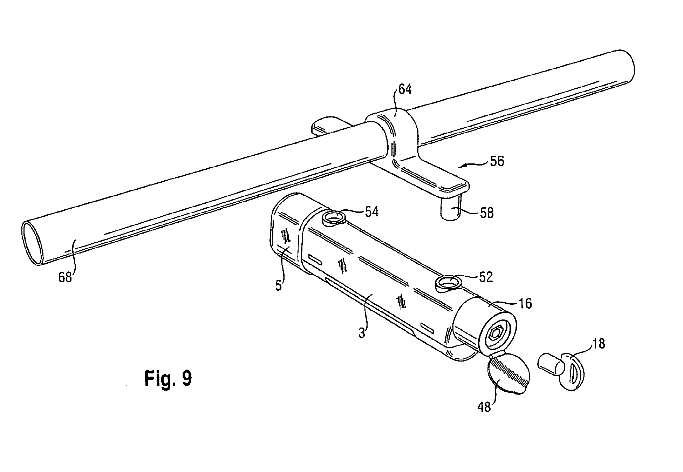

Figur 8 zeigt eine perspektivische Ansicht des Riegelteils 3, wobei ein Adapter 56 mit in der Figur 9 zu erkennenden Nasen 58 in dem Riegelteil 3 verriegelt wurde, indem das Schloss 16 geöffnet wurde und bei eingeschobenem Adapter 56 wieder geschlossen wurde. Der Adapter 56 weist eine Platte 60 zur Aufnahme der Nasen 58 und eine mit Hilfe einer Schraube 62 in ihrem Innendurchmesser veränderbare Schelle 64 auf. Weiterhin ist eine Distanzhülse 66 dargestellt, die in die Schelle 64 eingeschoben werden kann, wenn die durch die Schraube 62 gegebene Verstellbarkeit des Innendurchmessers der Schelle 64 nicht ausreicht, um den Adapter 56 an Lenkerstangen zu befestigen, die einen sehr kleinen Außendurchmesser aufweisen.

Figur 9 zeigt den Adapter 56 der Figur 8 in einem an einer Lenkerstange 68 eines Fahrrads 70 befestigten Zustand, wobei der Riegelteil 3 noch nicht mit den Nasen 58 des Adapterteils 56 verriegelt wurde. Hierzu müssen die Nasen 58 in die Öffnungen 52 bzw. 54 des Riegelteils 3 eingeschoben werden, mit Hilfe des Schlüssels das Schloss 16 geschlossen werden, um dann den Zustand zu erreichen, in dem der Riegelteil 3 mit dem Adapter 56, wie in Figur 8 dargestellt, verriegelt ist, um eine Befestigung des Riegelteils 3 an der Lenkerstange 68 zu erreichen.

Das Schloss 16 hat somit die doppelte Funktion des Verriegelns des Bügelteils 4 im Riegelteil 3, wenn das Fahrrad 70 abgeschlossen werden soll, und des Verriegelns des Riegelteils 3 im Adapter 56, wenn das Fahrrad 70 eine Frontbeleuchtung durch den Leuchtkörper 5 erhalten soll.

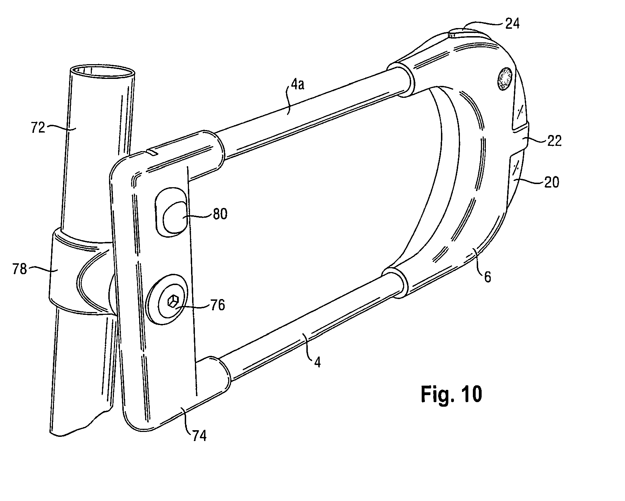

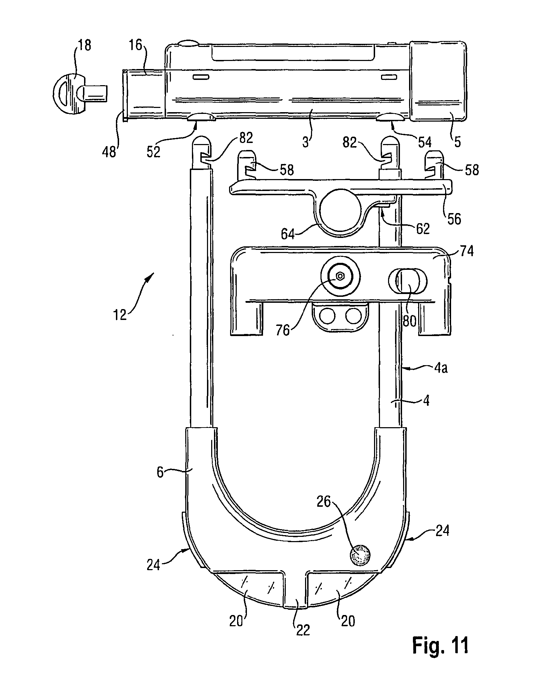

Figur 10 zeigt ein Bügelteil gemäß Figur 4, welches an einer Sattelstange 72 eines Fahrrads 70 befestigt ist. Hierzu ist eine zu dem Bügelteil 4 passende zweite Adapteraufnahme 74 vorgesehen, die über eine Schraube 76 mit einer zweiten Schelle 78 verbunden ist. Der zweite Adapter 74 weist einen Sicherungshebel 80 auf, der bei in dem Adapter 74 eingerastetem Bügelteil 4 mit einer in Figur 11 dargestellten Aussparung 82 in der in der Figur 10 oben dargestellten Stahlstange 4a des Bügelteils 4 eingreift, um die Stahlstange 4a des Bügelteils 4 in der als Aufnahme für den Bügelteil 4 dienenden Adapteraufnahme 74 zu halten und somit das Bügelteil 4 an der Sattelstange 72 mit Hilfe der Schelle 78 befestigen zu können.

Figur 11 zeigt das Fahrradbügelschloss 12 der Figur 4 zusammen mit dem ersten als Aufnahme für den Riegelteil 3 dienenden Adapter 56 der Figur 8 und dem zweiten, als zweite Aufnahme für den Bügelteil 4 dienenden zweiten Adapter 74 gemäß Figur 10.

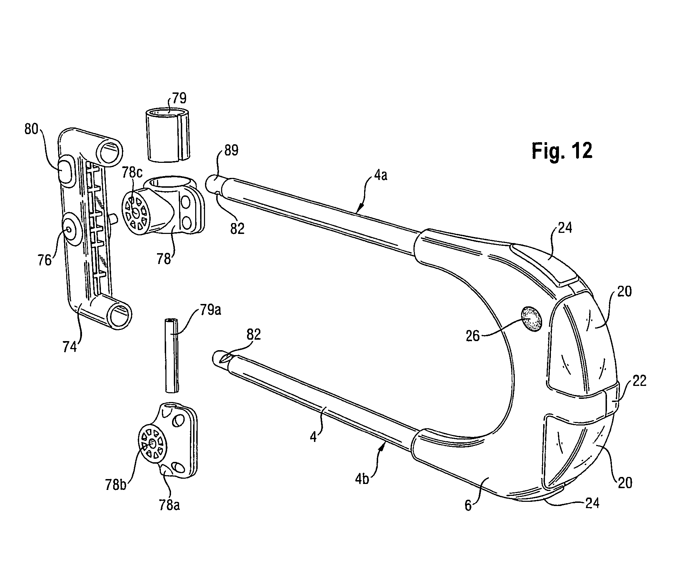

Figur 12 zeigt eine Explosionszeichnung zur genaueren Darstellung des Adapters 74. Dabei ist zum einen die Schelle 78 der Figur 10 dargestellt, die zum Befestigen des Adapters 74 an einer Sattelstange 72 dient. Zum anderem ist eine weitere alternative Schelle 78a dargestellt, die einen wesentlich kleineren Innendurchmesser aufweist, um den Adapter 74 auch an Stangen 72 an einem Fahrrad 70 befestigen zu können, die einen sehr viel kleineren Außendurchmesser aufweisen. Beispielsweise kann mit Hilfe der Schelle 78a der Adapter 74 auch an einem Gepäckträger befestigt werden, wie dies schematisch bei der ersten Ausführungsform in der Figur 3 angedeutet ist.

Beide Schellen 78 und 78a können in ihrem Innendurchmesser durch Distanzhülsen 79 bzw. 79a noch weiter verkleinert werden, um auch bei gleichbleibender Schelle 78 bzw. 78a eine Innendurchmesseranpassung vornehmen zu können. Die Schellen 78a und 78 lassen sich durch Einschrauben der Schrauben 76 in Gewinde 78b bzw. 78c an den Schellen 78a bzw. 78 befestigen.

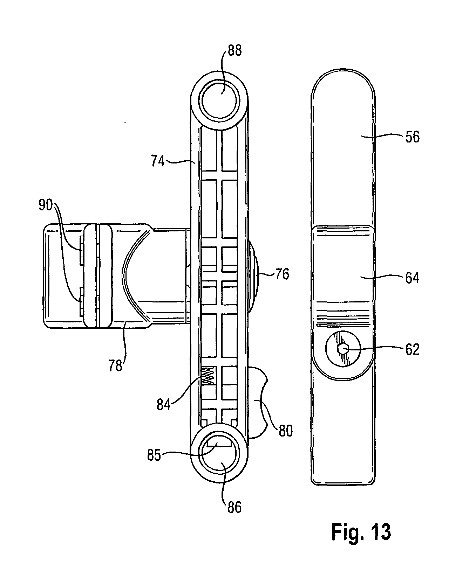

Figur 13 zeigt eine Aufsicht der Adapter 56 und 74. Figur 13 zeigt, dass der Sicherungshebel 80 durch eine Feder 84 vorgespannt ist, so dass das Riegelteil 85 des Sicherungshebels 80 in den Innendurchmesser einer entsprechenden Öffnung 86 zur Aufnahme der Stahlstrebe 4a des Bügelteils 4 hineinragt. Wird nun die Stahlstrebe 4a des Bügelteils 4 in die Öffnung 86 und die gegenüberliegende Stahlstrebe 4b (siehe Figur 12) des Bügelteils 4 in die Öffnung 88 eingeschoben, so drückt das vordere Ende 89 der Stahlstrebe 4a gegen die Kraft der Feder 84 den Sicherungshebel 80 zurück, bis der Vorsprung 85 des Sicherungshebels 80 in die Aussparung 82 in der Strebe 4a einrasten kann und somit das Bügelteil 4 in dem Adapter 74 verriegelt.

Weiterhin zeigt Figur 13 Schrauben 90 zum Verstellen des Innendurchmessers der Schelle 78.

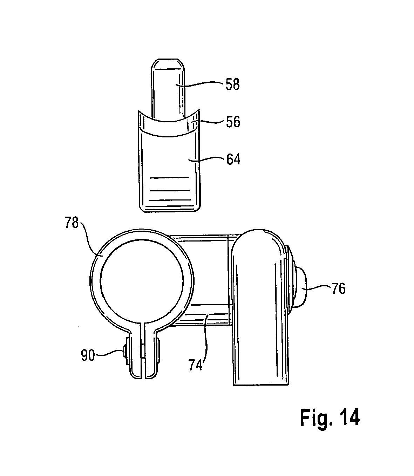

Figur 14 zeigt die Adapter 56 und 74 der Figur 13 in einer Seitenansicht.

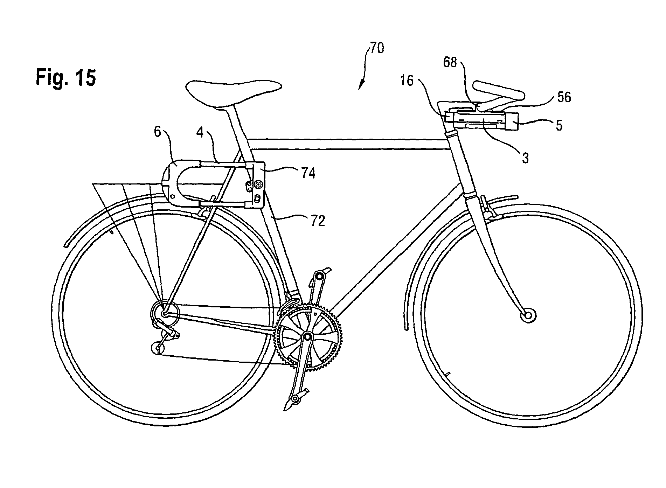

Figur 15 zeigt den Bügelteil 4 und den Riegelteil 3 an einem Fahrrad 70, wenn der erste Leuchtkörper 5 bzw. der zweite Leuchtkörper 6 als Vorder- bzw. als Rücklicht für das Fahrrad 70 verwendet werden sollen. Hierfür wurden das Bügelteil 4 in den Adapter 74 eingeschoben, der an der Sattelstange 72 befestigt ist, während das Riegelteil 3 an dem Adapter 56 mit Hilfe des Schlosses 16 verriegelt wurde, wobei der Adapter 56 mit Hilfe der Schelle 64 an der Lenkerstange 68 des Fahrrads 70 befestigt wurde. Bei dem als Frontlicht dienenden Leuchtkörper 5 bzw. dem als Rücklicht dienenden Leuchtkörper 6 können nun die Leuchteinheiten 14 bzw. 20 mit Hilfe der Schalter 50 bzw. 26 ein- bzw. ausgeschaltet werden.

Die Leuchteinheiten 14 bzw. 20 können beliebige Farben abstrahlen. Hier strahlt die Leuchteinheit 14 weisses bzw. die Leuchteinheit 20 rotes Licht ab.

## Patentansprüche

1. Fahrradbügelschloss (12), mit einem in einem Riegelteil (3) verriegelbaren Bügelteil (4),
**gekennzeichnet durch** einen an dem Riegelteil (3) angeordneten ersten Leuchtkörper (5) und einen an dem Bügelteil (4) angeordneten zweiten Leuchtkörper (6).

2. Fahrradbügelschloss nach Anspruch 1,
wobei der erste Leuchtkörper (5) zur Abstrahlung von im wesentlichen weißem und/oder im wesentlichen rotem Licht ausgebildet ist.

3. Fahrradbügelschloss nach einem der vorstehenden Ansprüche,
wobei der zweite Leuchtkörper (6) zur Abstrahlung von im wesentlichen weißem und/oder im wesentlichen rotem Licht ausgebildet ist.

4. Fahrradbügelschloss nach einem der vorstehenden Ansprüche,
wobei der Riegelteil (3) in einer zugeordneten, an einem Fahrrad (7, 70) befestigbaren ersten Aufnahme (2, 56) lösbar, bevorzugt mittels einer Klemm-, Klick-, und/oder Steckverbindung, befestigbar ist.

5. Fahrradbügelschloss nach einem der vorstehenden Ansprüche,
wobei der Bügelteil (4) in einer zugeordneten, an einem Fahrrad (7, 70) befestigbaren zweiten Aufnahme (1, 74) lösbar, bevorzugt mittels einer Klemm-, Klick-, und/oder Steckverbindung, befestigbar ist.

6. Fahrradbügelschloss nach einem der vorstehenden Ansprüche,
wobei die erste Aufnahme (2, 56) an einer Sattelstütze (8, 72) und/oder an einem Lenker (10, 68) eines Fahrrads (7, 70) lösbar, bevorzugt auch justierbar, befestigbar ist.

7. Fahrradbügelschloss nach einem der vorstehenden Ansprüche,
wobei die zweite Aufnahme (1, 74) an einer Sattelstütze (8, 72) und/oder an einem Lenker (10, 68) eines Fahrrads (7, 70) lösbar, bevorzugt auch justierbar, befestigbar ist.

8. Fahrradbügelschloss nach einem der vorstehenden Ansprüche,
wobei der erste Leuchtkörper (5), bevorzugt mittels einer Klemm-, Klick-und/oder Steckverbindung lösbar, an dem Riegelteil (3) befestigt ist.

9. Fahrradbügelschloss nach einem der vorstehenden Ansprüche,
wobei der zweite Leuchtkörper (6), bevorzugt mittels einer Klemm-, Klick-und/oder Steckverbindung lösbar, an dem Bügelteil (4) befestigt ist.

10. Fahrradbügelschloss nach einem der vorstehenden Ansprüche,
wobei es sich bei dem ersten (5) und/oder dem zweiten (6) Leuchtkörper um einen aktiven und/oder passiven Leuchtkörper (5, 6) handelt.

11. Fahrradbügelschloss nach einem der vorstehenden Ansprüche,
**gekennzeichnet durch** mindestens eine an dem Riegelteil (3) und/oder an dem Bügelteil (4) angeordnete und mit dem jeweiligen Leuchtkörper (5, 6) verbundene Energieversorgung (34, 38) für den ersten (5) und/oder den zweiten (6) Leuchtkörper.

12. Fahrradbügelschloss nach einem der vorstehenden Ansprüche,
wobei der Riegelteil (3) ein erstes Gehäuse (28) für den ersten Leuchtkörper (5) und der Bügelteil (4) ein zweites Gehäuse (30) für den zweiten Leuchtkörper (6) bildet.

## Claims

1. A bicycle shackle lock (12) having a shackle portion (4) lockable in a locking portion (3),
**characterised by** a first lighting member (5) arranged on the locking portion (3) and a second lighting member (6) arranged on the shackle portion (4).

2. A bicycle shackle lock according to claim 1 wherein the first lighting member (5) is adapted to emit substantially white and/or substantially red light.

3. A bicycle shackle lock according to one of the preceding claims wherein the second lighting member (6) is adapted to emit substantially white and/or substantially red light.

4. A bicycle shackle lock according to one of the preceding claims wherein the locking portion (3) can be fixed releasably, preferably by means of a clamping, clicking and/or plug-in connection, in an associated first mounting means (2, 56) which can be fixed to a bicycle (7, 70).

5. A bicycle shackle lock according to one of the preceding claims wherein the shackle portion (4) can be fixed releasably, preferably by means of a clamping, clicking and/or plug-in connection, in an associated second mounting means (1, 74) which can be fixed to a bicycle (7, 70).

6. A bicycle shackle lock according to one of the preceding claims wherein the first mounting means (2, 56) can be fixed releasably, preferably also adjustably, to a saddle support (8, 72) and/or to a steering means (10, 68) of a bicycle (7, 70).

7. A bicycle shackle lock according to one of the preceding claims wherein the second mounting means (1, 74) can be fixed releasably, preferably also adjustably, to a saddle support (8, 72) and/or to a steering means (10, 68) of a bicycle (7, 70).

8. A bicycle shackle lock according to one of the preceding claims wherein the first lighting member (5) is fixed to the locking portion (3) releasably preferably by means of a clamping, clicking and/or plug-in connection.

9. A bicycle shackle lock according to one of the preceding claims wherein the second lighting member (6) is fixed to the shackle portion (4) releasably preferably by means of a clamping, clicking and/or plug-in connection.

10. A bicycle shackle lock according to one of the preceding claims wherein the first lighting member (5) and/or the second lighting member (6) involves an active and/or passive lighting member (5, 6).

11. A bicycle shackle lock according to one of the preceding claims **characterised by** at least one power supply (34, 38) for the first lighting member (5) and/or the second lighting member (6), the power supply being arranged on the locking portion (3) and/or the shackle portion (4) and being connected to the respective lighting member (5, 6).

12. A bicycle shackle lock according to one of the preceding claims wherein the locking portion (3) forms a first housing (28) for the first lighting member (5) and the shackle portion (4) forms a second housing (30) for the second lighting member (6).

## Revendications

1. Cadenas en U pour bicyclette (12) avec une partie en U (4) pouvant être verrouillée dans une partie de verrou (3),
**caractérisé par** un premier corps lumineux (5) disposé sur la partie de verrou (3) et un second corps lumineux (6) disposé sur la partie en U (4).

2. Cadenas en U pour bicyclette selon la revendication 1,
le premier corps lumineux (5) étant destiné à émettre un rayonnement de lumière essentiellement blanche et/ou essentiellement rouge.

3. Cadenas en U pour bicyclette selon l'une quelconque des revendications précédentes,
le second corps lumineux (6) étant destiné à émettre un rayonnement de lumière essentiellement blanche et/ou essentiellement rouge.

4. Cadenas en U pour bicyclette selon l'une quelconque des revendications précédentes,
la partie de verrou (3) pouvant être fixée de manière amovible, de préférence au moyen d'une jonction par serrage, à déclic et/ou par emboîtement dans un premier logement (2, 56) associé, pouvant être fixé sur une bicyclette (7, 70).

5. Cadenas en U pour bicyclette selon l'une quelconque des revendications précédentes,
la partie en U (4) pouvant être fixée de manière amovible, de préférence au moyen d'une jonction par serrage, à déclic et/ou par emboîtement dans un second logement (1, 74) associé, pouvant être fixé sur une bicyclette (7, 70).

6. Cadenas en U pour bicyclette selon l'une quelconque des revendications précédentes,
le premier logement (2, 56) pouvant être fixé de manière amovible, de préférence également de manière ajustable, sur un tube porte-selle (8, 72) et/ou sur un guidon (10, 68) d'une bicyclette (7, 70).

7. Cadenas en U pour bicyclette selon l'une quelconque des revendications précédentes,
le second logement (1, 74) pouvant être fixé de manière amovible, de préférence également de manière ajustable, sur un tube porte-selle (8, 72) et/ou sur un guidon (10, 68) d'une bicyclette (7, 70).

8. Cadenas en U pour bicyclette selon l'une quelconque des revendications précédentes,
le premier corps lumineux (5) étant fixé de manière amovible de préférence au moyen d'une jonction par serrage, à déclic et/ou par emboîtement sur la partie de verrou (3).

9. Cadenas en U pour bicyclette selon l'une quelconque des revendications précédentes,
le second corps lumineux (6) étant fixé de manière amovible de préférence au moyen d'une jonction par serrage, à déclic et/ou par emboîtement sur la partie en U (4) .

10. Cadenas en U pour bicyclette selon l'une quelconque des revendications précédentes,
le premier (5) et/ou le second (6) corps lumineux étant un corps lumineux (5, 6) actif et/ou passif.

11. Cadenas en U pour bicyclette selon l'une quelconque des revendications précédentes,
**caractérisé par** au moins une alimentation en énergie (34, 38) pour le premier (5) et/ou le second (6) corps lumineux disposée sur la partie de verrou (3) et/ou sur la partie en U (4) et reliée à chaque corps lumineux (5, 6).

12. Cadenas en U pour bicyclette selon l'une quelconque des revendications précédentes,
la partie de verrou (3) formant un premier boîtier (28) pour le premier corps lumineux (5) et la partie en U (4) formant un second boîtier (30) pour le second corps lumineux (6).
